# EUROPÄISCHE PATENTSCHRIFT

(11) **EP 3 211 597 B1**
(45) Veröffentlichungstag und Bekanntmachung des Hinweises auf die Patenterteilung: **11.12.2019**
(21) Anmeldenummer: 17157055.9
(22) Anmeldetag: 21.02.2017
(51) Int. Cl.: G06T 7/80, G06T 7/33

(54) **VERFAHREN ZUR GEWINNUNG VON, INSBESONDERE INTRINSISCHEN, KALIBRIERUNGSDATEN**
METHOD FOR OBTAINING CALIBRATION DATA
MÉTHODE D'OBTENTION DES DONNÉES D'ÉTALONNAGE

(30) Priorität: 25.02.2016 DE 102016103317
(43) Veröffentlichungstag der Anmeldung: 30.08.2017
(73) Patentinhaber: Roboception GmbH, 81241 München (DE)
(72) Erfinder: Hirschmüller, Heiko, 80993 München (DE); Suppa, Michael, 80686 München (DE)
(74) Vertreter: Würmser, Julian

(56) Entgegenhaltungen:
- EP-A1- 2 966 594
- US-B1- 9 230 326

## Beschreibung

Die Erfindung betrifft ein Verfahren zur Gewinnung von Kalibrierungsdaten, einen computerlesbaren Speicher mit Instruktionen zur Implementierung des Verfahrens sowie ein System mit einer Kamera, insbesondere einer Stereokamera.

Kameras, insbesondere Stereokameras, werden in einer Vielzahl von industriellen Anwendungen eingesetzt. Ein Anwendungsfall ist die Bewegungsplanung und Navigation von Geräten, beispielsweise Robotern, Roboterarmen oder Fahrzeugen. Kameras helfen einem Roboter bei der Bewegungsplanung und Navigation innerhalb einer vorgegebenen Umgebung und ermöglichen das Auffinden, Greifen und Bearbeiten von Objekten. Stereokameras sind in diesem Zusammenhang besonders vorteilhaft, da sie aufgrund von zwei nebeneinander angebrachten Objektiven eine Erfassung der Umwelt mit Tiefeninformation ermöglichen.

Für den Einsatz von Kameras als Messinstrument ist es notwendig, diese zu kalibrieren. Eine Kamerakalibrierung ist dafür zuständig, Verzerrungen eines Bildes, die durch das Objektiv der Kamera entstehen, sowie die Brennweite und den Bildhauptpunkt zu bestimmen (intrinsische Kalibrierung). Außerdem ist es notwendig, bei der Verwendung von mehreren Optiken oder Kameras, deren Position zueinander zu erfassen (extrinsische Kalibrierung). Von einer extrinsischen Kalibrierung spricht man auch, wenn die Ausrichtung eines Objektivs innerhalb einer dreidimensionalen Umgebung oder relativ zu einer bestimmten Vorrichtung, z.B. der Greifarm eines Roboters, erfasst werden soll.

Üblicherweise wird zum Kalibrieren ein Objekt mit einem genau bekannten Muster verwendet. Oft wird eine Ebene mit Gitterpunkten oder eine Platte mit Kreisen oder Schachbrettmustern verwendet. Die einzelnen Gitterpunkte sind häufig quadratische schwarze Flächen, die insgesamt regelmäßig innerhalb eines Rechtecks angeordnet sind. Für die Kalibrierung ist es meist notwendig, die Abmessungen der Quadrate (Länge und Höhe) und/oder des gesamten Kalibrierungsmusters zu kennen.

Intrinsische Kalibrierungsdaten umfassen üblicherweise Angaben über die folgenden Parameter:
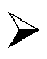 Brennweite (f);
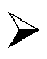 X-Wert des Bildmittelpunkts (Ox);
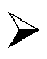 Y-Wert des Bildmittelpunkts (Oy);
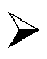 Pixelformatverhältnis in X/Y-Richtung (s);
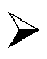 Schiefe (skew);
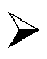 Verzeichnungsparameter (k1, ...).

Die entsprechenden Parameter werden häufig zur Erzeugung einer 3x3-Abbildungsmatrix und einer Funktion (z.B. Polynom) zur Modellierung einer Verzeichnung verwandt, die letztendlich das aufgenommene Bild in ein verzerrungsfreies Bild abbildet.

Für die Gewinnung von intrinsischen Kalibrierungsdaten ist es üblicherweise notwendig, dass das Kalibrierungsmuster in unterschiedlichen Ausrichtungen mit der zu kalibrierenden Kamera aufgenommen wird. Es ergibt sich also eine Vielzahl von Bildern, die mittels bekannter Bildverarbeitungsverfahren ausgewertet werden, so dass die Kalibrierungsdaten ermittelt werden können. Ein gängiges Verfahren ist in dem Artikel "A Flexible New Technique for Camera Calibration" von Zhengyou Zhang (vgl. http://research.microsoft.com/∼zhang) beschrieben.

Häufig sind die Kameras, wie bereits erwähnt, an Robotern oder Fahrzeugen angeordnet, so dass die Gewinnung der Bilder für die Kalibrierung teilautomatisch oder vollautomatisch erfolgen kann.

Für eine erfolgreiche Kalibrierung einer Kamera ist es notwendig, die aufgenommenen Bilder hinsichtlich deren Geeignetheit zur Ermittlung von Kalibrierungsdaten zu bewerten. Theoretisch ist es denkbar, sehr viele Bilder zu erfassen und zur Kalibrierung auszuwerten. Tatsächlich erhöht dies jedoch die notwendige Rechenleistung und führt nur selten zu besseren Ergebnissen, da viele ähnliche Bilder im mathematischen Optimierungsschritt miteinander korrelieren. Durch eine unausgewogene Bildauswahl, falls das Kalibriermuster z.B. häufiger im linken Bildteil als im rechten aufgenommen wird, kann sich die Kalibrierung durch diesen Bias auch verschlechtern. Daher ist es zu bevorzugen, nach Möglichkeit eine sehr geringe Anzahl wohldefinierter Bilder für die Kalibrierung auszuwählen, wobei das Auswahlverfahren robust sein sollte.

Die EP 2 966 594 A1 beschreibt ein Verfahren zur Gewinnung von Kalibrierungsdaten gemäß dem Oberbegriff des Anspruchs 1. Ein weiteres Verfahren zum Kalibrieren einer Stereokamera ist aus der US 9,230,326 B1 bekannt.

Ausgehend von diesem Stand der Technik ist es Aufgabe der vorliegenden Erfindung, ein verbessertes Verfahren zur Gewinnung von Kalibrierungsdaten anzugeben.

Diese Aufgabe wird durch das Verfahren gemäß dem Anspruch 1 gelöst.

Insbesondere wird diese Aufgabe durch ein Verfahren zur Gewinnung von Kalibrierungsdaten einer Kamera gelöst, wobei das Verfahren umfasst:
a) Erfassen einer Vielzahl von Bildern mittels der Kamera, wobei die Bilder eine Abbildung eines Kalibrierungsmusters umfassen;
b) Auswahl mindestens eines ersten Kalibrierungsbilds aus der Vielzahl von Bildern;
c) Auswahl mindestens eines zweiten Kalibrierungsbilds aus der Vielzahl von Bildern;
d) Verarbeitung des ersten und des zweiten Kalibrierungsbildes zur Gewinnung der Kalibrierungsdaten,
wobei der Schritt b) umfasst:
b1) Bestimmen mindestens eines Markierungspunkts, insbesondere eines Eckpunkts, des Kalibrierungsmusters in einem Zielbild der Vielzahl von Bildern;
b2) Bestimmen, ob sich der Markierungspunkt innerhalb eines vordefinierten Bereichs des Zielbilds befindet;
b3) Auswahl des Zielbilds als erstes Kalibrierungsbild, wenn sich der Markierungspunkt innerhalb des vordefinierten Bereichs befindet.

Ein zentraler Punkt der vorliegenden Erfindung besteht also darin, dass aus einer Vielzahl von erfassten Bildern einige wenige ausgewählt werden, die zur Kalibrierung der Kamera besonders geeignet sind. Ein zur Auswahl bereitstehendes Bild wird erfindungsgemäß als Zielbild bezeichnet, wobei ggf. mehrere Zielbilder analysiert werden, bis ein geeignetes Kalibrierungsbild aus der Vielzahl von Zielbildern ausgewählt wird.

Erfindungsgemäß erfolgt im Schritt b) eine Auswahl eines Kalibrierungsbildes in Abhängigkeit davon, ob sich ein bestimmter Markierungspunkt innerhalb eines vordefinierten Bereichs befindet. Ein Markierungspunkt ist ein Punkt innerhalb eines Bildes, der eine "markante" Stelle des Kalibrierungsmusters kennzeichnet. Vorzugsweise werden Eckpunkte und/oder Mittelpunkte verwandt, die sich mittels gängiger Bildverarbeitungsmaßnahmen einfach in jedem Bild wiederfinden lassen, welches das Kalibrierungsmuster zeigt.

Die Auswahl von bestimmten Bildern, die das Kalibrierungsmuster in einer bestimmten Ausrichtung zeigen, hat den Vorteil, dass die Kalibrierungsdaten mit einem geringen rechnerischen Aufwand gewonnen werden können. Des Weiteren lässt sich die Kalibrierung in sehr kurzer Zeit durchführen. Letztendlich können durch das erfindungsgemäße Kalibrierungsverfahren mit wohldefinierten, vorgegebenen Kalibrierposen vorgegebene Standards hinsichtlich der Qualität der Kalibrierungsdaten erfüllt werden.

Das Verfahren zur Gewinnung von Kalibrierungsdaten wird vorzugsweise für Stereokameras angewandt.

Der genannte vordefinierte Bereich kann erfindungsgemäß derart definiert werden, dass dieser eine bestimmte Anzahl von Pixeln an einer bestimmten Stelle der aufgenommenen Bilder bezeichnet. Alternativ kann der vordefinierte Bereich auch durch die Vorgabe eines Umrisses oder von Distanzen, beispielsweise in Pixeln, von bestimmten Punkten, beispielsweise den Eckpunkten des Bildes, erfolgen.

Erfindungsgemäß werden mehrere Markierungspunkte in jedem Zielbild bestimmt und mit einem dem jeweiligen Markierungspunkt zugeordneten vordefinierten Bereich verglichen. Eine Auswahl des Zielbilds als erstes Kalibrierungsbild erfolgt dann, wenn sich die einzelnen Markierungspunkte innerhalb des für den jeweiligen Markierungspunkt vorgesehenen, vordefinierten Bereichs befinden. Durch die Verwendung von mehreren Markierungspunkten kann es sichergestellt werden, dass das ausgewählte erste Kalibrierungsbild ein Bild ist, das das Kalibrierungsmuster in einer Ausrichtung zeigt, bei der dieses eine vorgegebene Maximaldistanz nicht überschreitet und/oder eine vorgegebene Minimaldistanz nicht unterschreitet. Weiterhin können durch die Wahl der Markierungspunkte und der vordefinierten Bereiche eine Ausrichtung des Kalibrierungsmusters vorgegeben werden. So kann sichergestellt werden, dass das Kalibrierungsmuster in einer ausreichenden Größe erfasst wird, wobei für die Kalibrierung notwendige Bereiche nicht abgeschnitten sind. Weiterhin können unterschiedliche Ausrichtungen des Kalibrierungsmusters insbesondere bei der Auswahl von mehreren Bildern, nämlich dem ersten und dem zweiten Kalibrierungsbild und ggf. weiteren Bildern sichergestellt werden. Die Auswahl von Kalibrierungsbildern in unterschiedlichen Ausrichtungen ermöglicht es, die Qualität der Kalibrierungsdaten zu erhöhen.

Mindestens einer der vordefinierten Bereiche kann derart gewählt sein, dass der vordefinierte Bereich Bildpunkte erfasst, die in Längsrichtung (X-Richtung) eine geringe Distanz zu einer Ecke des Zielbilds aufweisen. Eine geringe Distanz in Längsrichtung kann beispielsweise derart definiert sein, dass die Pixel eine Pixeldistanz haben, die kleiner ist als 30% oder 20% oder 15% der Gesamtlänge (in Pixel) des Zielbilds.

Mindestens einer der vordefinierten Bereiche kann derart gewählt sein, dass der vordefinierte Bereich Bildpunkte erfasst, die in Querrichtung (Y-Richtung) eine geringe Distanz zu einer Ecke aufweisen. Erfindungsgemäß kann eine geringer Distanz in Querrichtung derart definiert sein, dass die Pixel eine Pixeldistanz haben, die kleiner ist als 30% oder 20% oder 15% der Gesamtbreit/-höhe (in Pixel) des Zielbilds.

Erfindungsgemäß können sich einer oder mehrere vordefinierte Bereiche in einer oder mehreren der vier Ecken des Zielbilds befinden. Diese Bereiche können rechteckig ausgestaltet sein und durch die Vorgabe einer Maximaldistanz in Längs- und/oder Querrichtung definiert werden. Diese Maximaldistanzen können beispielsweise kleiner als 20% der Gesamtlänge des Zielbilds und kleiner als 20% der Gesamthöhe des Zielbilds sein.

Wie bereits erläutert, sollen erfindungsgemäß mehrere Kalibrierungsbilder, insbesondere mindestens zwei, vorzugsweise mindestens drei Kalibrierungsbilder zur Gewinnung der Kalibrierungsdaten ausgewählt werden. Die Auswahl des zweiten Kalibrierungsbildes erfolgt im Schritt c) und umfasst vorzugsweise:
c1) Bestimmen mindestens eines ersten Markierungspunkts des Kalibrierungsmusters in einem zweiten Zielbild der Vielzahl von Bildern;
c2) Bestimmen, ob sich der erste Markierungspunkt gemäß Schritt c1) innerhalb eines vordefinierten Bereichs des zweiten Zielbilds befindet;
c3) Auswahl des Zielbilds als zweites Kalibrierungsbild, wenn sich der erste Markierungspunkt gemäß Schritt c1) innerhalb des vordefinierten Bereichs des zweiten Zielbilds befindet.

Vorzugsweise wird im Schritt c) zur Auswahl des zweiten Kalibrierungsbilds mindestens ein erster Markierungspunkt verwandt, der ein Mittelpunkt zwischen zwei Eckpunkten des Kalibrierungsmusters ist.

Vorzugsweise werden neben diesem Mittelpunkt zwei Eckpunkte des Kalibrierungsmusters bestimmt, die ihrerseits wiederum in einem diesem zugeordneten vordefinierten Bereich liegen müssen, um ein bestimmtes Zielbild als zweites Kalibrierungsbild zu qualifizieren. Letztendlich werden also insgesamt mindestens drei Markierungspunkte im erfassten Kalibrierungsmuster ermittelt und es wird festgestellt, ob sich diese drei Markierungspunkte in einem vordefinierten Bereich befinden.

Der den jeweiligen Eckpunkten zugeordnete vordefinierte Bereich kann ein Eckbereich des Zielbilds sein. Alternativ kann es sich hierbei um einen Bereich handeln, der nur an einem Randbereich des Zielbilds anliegt. Vorzugsweise werden die beiden vordefinierten Bereiche für die beiden Eckpunkte des Schritts c) derart gewählt, dass diese an die einander gegenüberliegenden Ränder des Zielbilds anschließen. In einer Ausführungsform sind diese beiden vordefinierten Bereiche achsensymmetrisch in Längs- oder Querrichtung des Zielbilds angeordnet. Der vordefinierte Bereich für den Mittelpunkt (gemäß Schritt c1) kann sich innerhalb eines sich in Längs- oder Querrichtung erstreckenden Bandes befinden. Vorzugsweise ist dieser vordefinierte Bereich von den Rändern beispielsweise um mindestens 10%, beabstandet.

In einer Ausführungsform wird zur Bestimmung mindestens eines der Markierungspunkte ein Polygon um zumindest einen Teilabschnitt des erfassten Kalibrierungsmusters gelegt. Das Polygon kann unabhängig von dem gewählten Kalibrierungsmuster maximal acht Ecken aufweisen. Vorzugsweise wird ein Polygon mit maximal vier Ecken verwandt. Das Polygon kann beispielsweise das Kalibrierungsmuster gänzlich umschließen und zur Bestimmung der Markierungspunkte verwendet werden. Der Umriss des Kalibrierungsmusters lässt sich mittels einfacher bildverarbeitender Operationen ermitteln. In einer Ausführungsform wird mindestens eine Ecke des Polygons, vorzugsweise mindestens zwei, als Markierungspunkt verwandt und/oder dient als Basis zur Berechnung von (weiteren) Markierungspunkten.

In einer Ausführungsform werden zumindest einige der Vielzahl von erfassten Bildern in Verbindung mit Feldern auf einer Anzeigeeinrichtung angezeigt. Die Felder können die vordefinierten Bereiche kennzeichnen. Das Anzeigen erfolgt vorzugsweise in Echtzeit. Das Anzeigen der erfassten Bilder in Kombination mit den Feldern ermöglicht es bei einer teilautomatischen Kalibrierung einem Benutzer, eine Rückmeldung zu geben, so dass dieser schnell und einfach eine geeignete Ausrichtung der Kamera und/oder des Kalibrierungsmusters vornehmen kann.

Die Erfassung der Kalibrierungsbilder kann vorzugsweise in mehreren, aufeinanderfolgen Phasen erfolgen. Beispielsweise kann dem ersten Kalibrierungsbild eine erste Phase, dem zweiten Kalibrierungsbild eine zweite Phase und weiteren Kalibrierungsbildern eine dritte bzw. vierte, bzw. fünfte, ... Phase zugeordnet sein. In einer Ausführungsform werden die erfassten Bilder in der ersten Phase solange in Verbindung mit einem ersten Satz von Feldern, die jeweils einen vordefinierten Bereich kennzeichnen, angezeigt, bis der Schritt b) bzw. das Bestimmen des ersten Kalibrierungsbilds abgeschlossen ist. In ähnlicher Weise kann in der zweiten Phase verfahren werden, wobei die erfassten Bilder solange in Verbindung mit einem zweiten Satz von Feldern angezeigt werden, die jeweils einen vordefinierten Bereich kennzeichnen, bis der Schritt c) bzw. die Bestimmung des zweiten Kalibrierungsbilds abgeschlossen ist. In entsprechender Weise kann in der dritten, vierten und/oder fünften Phase zur Bestimmung eines dritten, vierten oder fünften Kalibrierungsbilds verfahren werden. Durch die Verwendung von unterschiedlichen Sätzen von vordefinierten Bereichen, die als unterschiedliche Sätze von Feldern angezeigt werden, kann eine Auswahl von Kalibrierungsbildern getroffen werden, die sich deutlich, insbesondere hinsichtlich deren Ausrichtung, voneinander unterscheiden. Diese Auswahl ermöglicht eine effiziente Kalibrierung.

Die Kamera oder Stereokamera kann in einer Ausführungsform an einem Roboter oder einem Roboterarm angebracht sein. In diesem Zusammenhang ist es erfindungsgemäß möglich, dass die Ausrichtung und die Position der Kamera bzw. Stereokamera erfindungsgemäß verändert werden. Beispielsweise kann die Kamera mittels des Roboters oder dem Roboterarm derart ausgerichtet werden, dass das Kalibrierungsmuster in einer geeigneten Weise erfasst wird. Die geeignete Erfassung kann derart definiert sein, dass beispielsweise im Schritt b) und/oder im Schritt c) eine Auswahl eines bestimmten Bilds als erstes oder zweites Kalibrierungsbild vorgenommen werden kann.

In anderen Worten kann das Verfahren derart ausgestaltet sein, dass die erfassten Bilder mittels des Verfahrens dahingehend bewertet werden, ob sie als (erstes oder zweites oder weiteres) Kalibrierungsbild, beispielsweise in der ersten, zweiten, dritten, vierten und/oder fünften Phase, geeignet sind. Soweit dies nicht der Fall ist, erfolgt eine Neuausrichtung und/oder Neupositionierung der Kamera derart, dass bestehende "Mängel" beseitigt werden. Als Mangel kann einer oder mehrere der nachfolgenden Zustände bezeichnet werden:
- mindestens einer der Markierungspunkte befindet sich nicht in dem hierfür vorgesehenen Feld;
- das Kalibrierungsmuster wird nicht erfasst, oder ist zu groß oder zu klein.

Beispielsweise kann in einem iterativen Prozess die Ausrichtung und/oder Positionierung der Kamera so erfolgen, dass sehr schnell ein bestimmtes Bild als Kalibrierungsbild ausgewählt werden kann. Zusätzlich oder alternativ kann bei dem erfindungsgemäßen Verfahren eine Neupositionierung und/oder Neuausrichtung stattfinden, wenn eine bestimmte Phase, beispielsweise die erste Phase, abgeschlossen ist und eine andere Phase, beispielsweise die zweite Phase, beginnt.

Bei dem beschriebenen Verfahren kann entweder das Kalibrierungsmuster gegenüber der Kamera und/oder die Kamera gegenüber dem Kalibrierungsmuster ausgerichtet werden. Bei einer Ausrichtung der Kamera mittels eines Roboters und/oder eines Roboterarms kann eine vollautomatische intrinsische Kalibrierung stattfinden, wobei der Roboter und/oder der Roboterarm die Kamera jeweils in eine Position bringt, in der für die Kalibrierung geeignete Bilder erfasst werden können.

Die eingangs beschriebene Aufgabe wird des Weiteren durch einen computerlesbaren Speicher mit Instruktionen zur Implementierung des beschriebenen Verfahrens gelöst, wobei die Instruktionen das Verfahren vorzugsweise dann implementieren, wenn diese auf einer oder mehreren Recheneinheiten ausgeführt werden.

Es ergeben sich ähnliche Vorteile, wie diese bereits in Verbindung mit dem erfindungsgemäßen Verfahren beschrieben wurden.

Weiterhin wird die genannte Aufgabe durch ein System gelöst, das umfasst:
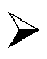 eine einzelne Kamera oder eine Stereokamera;
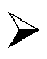 eine Anzeigeeinrichtung;
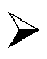 mindestens eine Recheneinheit;
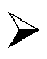 mindestens einen computerlesbaren Speicher.

Der computerlesbare Speicher enthält vorzugsweise Instruktionen zur Implementierung des bereits geschilderten Verfahrens.

Das System bewerkstelligt so ähnliche Vorteile, wie diese bereits in Verbindung mit dem Verfahren erläutert wurden.

Die eingangs genannte Aufgabe wird des Weiteren durch einen Roboter und/oder einen Roboterarm gelöst, an dem die Kamera insbesondere die Stereokamera, befestigt ist, wobei der Roboter mittels einer Steuerung derart gesteuert wird, dass zumindest eines der beschriebenen Verfahren zur Gewinnung von Kalibrierungsdaten umgesetzt wird. Beispielsweise können die Schritte a) bis d) ausschließlich und/oder teilweise durch die Steuerung implementiert werden. In einer Ausführungsform geht dem Schritt des Erfassens einer Vielzahl von Bildern das Ausrichten der Kamera unter Verwendung des Roboters voraus.

Weitere vorteilhafte Ausführungsformen ergeben sich anhand der Unteransprüche.

Nachfolgend wird die Erfindung mittels mehrerer Ausführungsbeispiele beschrieben, die anhand von Abbildungen näher erläutert werden. Hierbei zeigen:
- Fig. 1: ein System umfassend einen Computer mit einer daran angeschlossenen Stereokamera;
- Fig. 2: eine schematische Darstellung einer Kalibrierungsvorlage;
- Fig. 3: den schematischen Ablauf zur Erstellung einer Ansicht auf dem Computer gemäß Fig. 1, wobei erfasste Bilder mit einem Template zusammengeführt werden;
- Fig. 4: eine schematische erste Ansicht zur Gewinnung eines ersten Kalibrierungsbildes (erste Phase);
- Fig. 5: eine schematische zweite Ansicht zur Gewinnung eines zweiten Kalibrierungsbildes (zweite Phase);
- Fig. 6: eine schematische dritte Ansicht zur Gewinnung eines dritten Kalibrierungsbildes (dritte Phase);
- Fig. 7: eine schematische vierte Ansicht zur Gewinnung eines vierten Kalibrierungsbildes (vierte Phase);
- Fig. 8: eine schematische fünfte Ansicht zur Gewinnung eines fünften Kalibrierungsbildes (fünfte Phase); und
- Fig. 9: die schematische Zusammenführung der gewonnenen Kalibrierungsbilder aus der ersten bis fünften Phase zu einem Kalibrierungsdatensatz.

In der nachfolgenden Beschreibung werden für gleiche und gleichwirkende Teile dieselben Bezugsziffern verwendet.

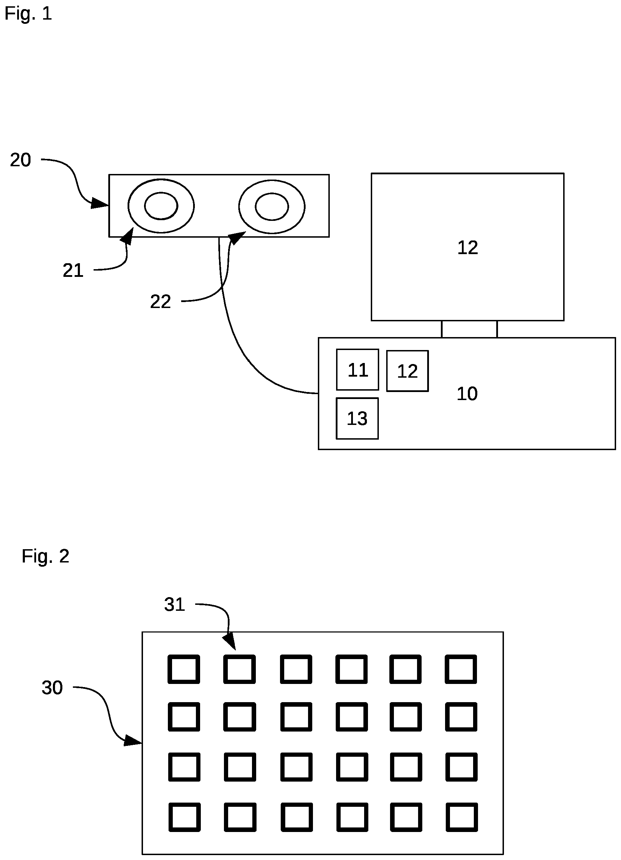

Fig. 1 zeigt einen Computer mit einer Verarbeitungseinrichtung 11, einer Anzeigeeinrichtung 12 und einem computerlesbaren Speicher 13. Der Computer 10 ist dazu ausgebildet, das erfindungsgemäße Verfahren auszuführen.

An dem Computer 10 ist eine Stereokamera 20 mit einer ersten Optik 21 und einer zweiten Optik 22 angeschlossen.

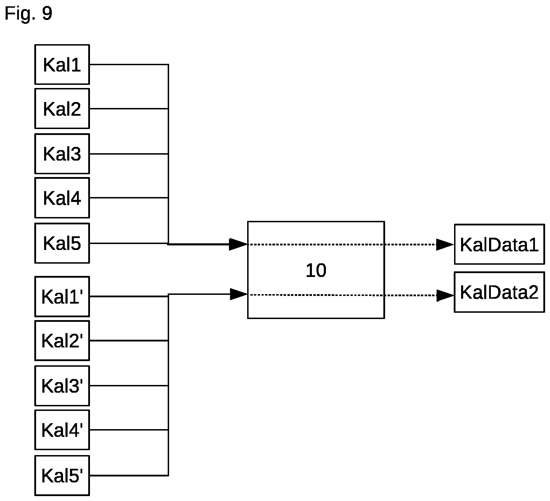

Erfindungsgemäß soll ein Verfahren zur Gewinnung von Kalibrierungsdaten KalData1, KalData2 (vgl. Fig. 9) angegeben werden.

In dem beschriebenen Ausführungsbeispiel werden wie anhand der Fig. 9 ersichtlich, jeweils fünf Kalibrierungsbilder Kal1, Kal2, Kal3, Kal4, Kal5 bzw. Kal1', Kal2', Kal3', Kal4', Kal5' erfasst und ausgewählt, um die ersten Kalibrierungsdaten KalData1 bzw. die zweiten Kalibrierungsdaten KalData2 zu ermitteln, wobei die ersten Kalibrierungsdaten KalData1 zur Kalibrierung der ersten Optik 21 und die zweiten Kalibrierungsdaten KalData2 zur Kalibrierung der zweiten Optik 22 geeignet sind.

In dem erfindungsgemäßen Ausführungsbeispiel wird eine Kalibrierungsvorlage 30, wie diese beispielhaft in Fig. 2 gezeigt ist, mittels der Stereokamera 20 in unterschiedlichen Ausrichtungen relativ zu der Stereokamera 20 erfasst. Der Computer 10, der das erfindungsgemäße Verfahren implementiert, wählt für die erste Optik 21 jeweils getrennt von der zweiten Optik 22 geeignete Kalibrierungsbilder Kal1, Kal2, Kal3, Kal4, Kal5, Kal1', Kal2', Kal3', Kal4', Kal5' aus. Vorzugsweise erfolgt die Auswahl in fünf Phasen, wobei die ersten fünf Phasen der ersten Optik 21 und die zweiten fünf Phasen der zweiten Optik 22 zugeordnet sind.

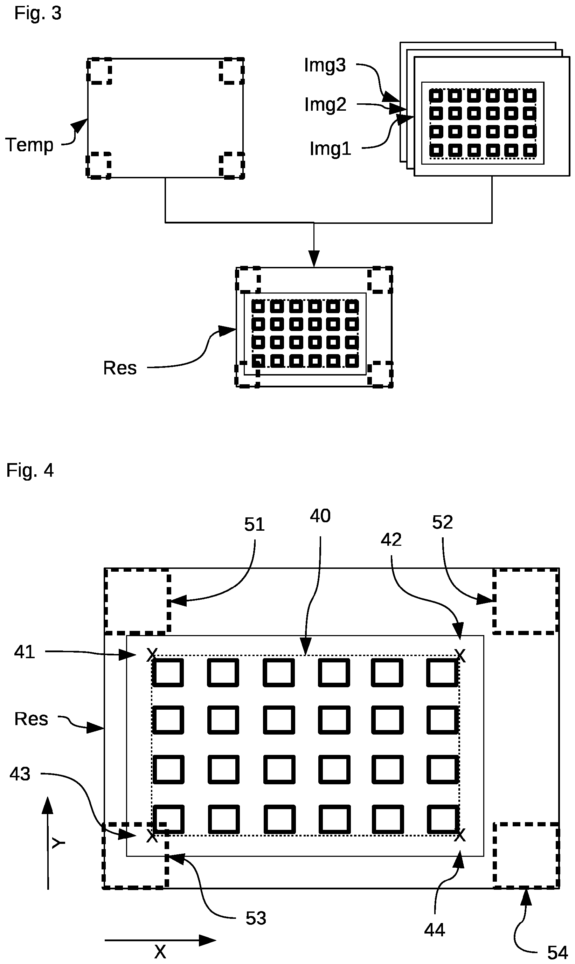

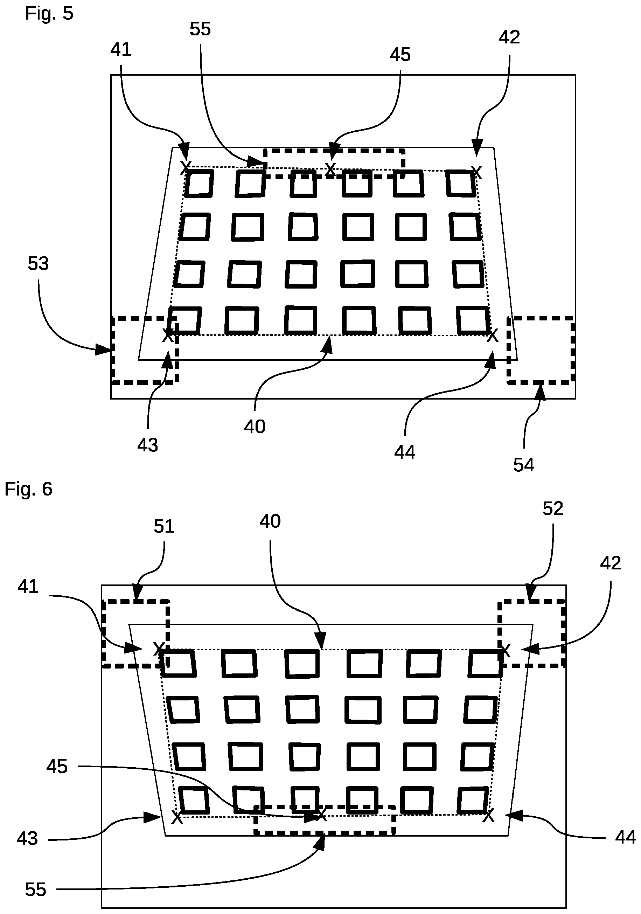

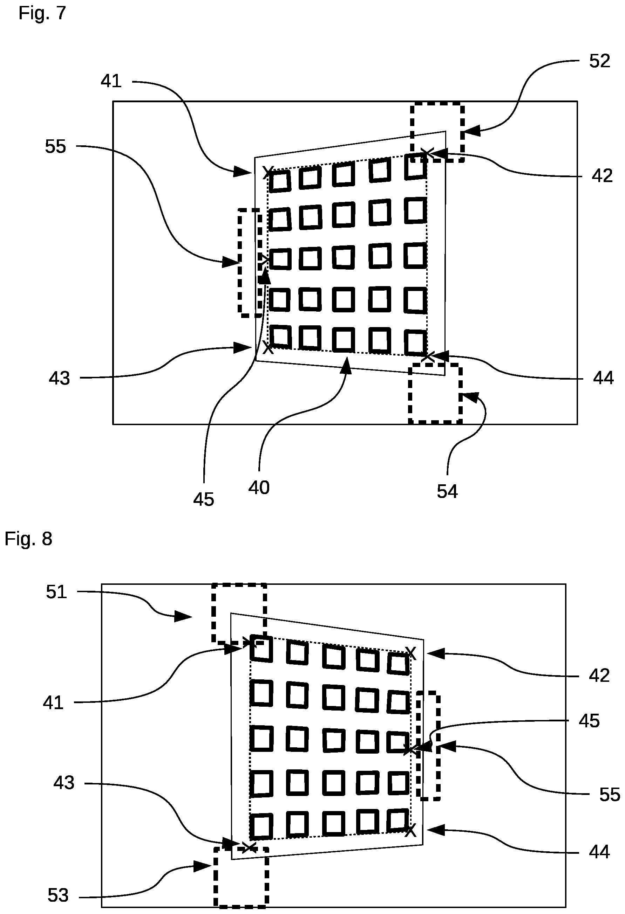

Die Fig. 4 - 8 zeigen exemplarische Ansichten der fünf Phasen, wobei die Ansicht der Fig. 4 der ersten Phase, die Ansicht der Fig. 5 der zweiten Phase, die Ansicht der Fig. 6 der dritten Phase, die Ansicht der Fig. 7 der vierten Phase und die Ansicht der Fig. 8 der fünften Phase zugeordnet ist.

Fig. 2 zeigt eine exemplarische Kalibrierungsvorlage 30. Diese kann beispielsweise ein bedruckter Karton sein, wobei vorzugsweise kontrastreiche Farben, beispielsweise nur Schwarz und Weiß verwandt werden. Auf der Kalibrierungsvorlage 30 der Fig. 2 ist ein Kalibrierungsmuster bestehend aus einer Vielzahl von Kalibrierungsquadraten 31 aufgebracht. Die Kalibrierungsquadrate 31 haben zueinander identische Abmessungen und Abstände. Die Kalibrierungsquadrate 31 der Kalibrierungsvorlage 30 sind in vier Zeilen und sechs Spalten angeordnet. Insgesamt ergeben sich somit 24 äquidistant angeordnete Kalibrierungsquadrate 31.

Die in Fig. 2 gezeigte Kalibrierungsvorlage 30 ist rein exemplarisch. Häufig werden Kalibrierungsvorlagen mit vollständig ausgefüllten Kalibrierungsquadraten 31 verwendet. Auch Kalibrierungsvorlagen 30 mit einem Kalibrierungsmuster, das einem Schachbrett ähnelt, oder mit schwarzen Kreisen sind üblich.

Fig. 4 zeigt eine Ansicht aus der ersten Phase zur Gewinnung eines ersten Kalibrierungsbilds Kal1. Diese Ansicht kann beispielsweise auf der Anzeigeeinrichtung 11 wiedergegeben werden. In dem Ausführungsbeispiel umfasst die Ansicht eine Wiedergabe des erfassten Kalibrierungsmusters sowie weitere graphische Elemente. Diese weiteren graphischen Elemente können umfassen:
- Zielfelder 51, 52, 53, 54, die Bestandteil eines Templates Temp (vgl. Fig. 3) sind; und/oder
- ein Umrissviereck 40; und/oder
- Markierungspunkt bzw. Symbole zur Kennzeichnung von Markierungspunkten.

Die Entstehung der Ansicht gemäß Fig. 4 ergibt sich aus Fig. 3. Über die erste Optik 21 der Stereokamera 20 werden die Bilder Img1, Img2, Img3 gewonnen. Diese Bilder Img1, Img2, Img3 werden mit dem Template Temp verschmolzen, das die Zielfelder 51, 52, 53, 54 enthält. Hieraus ergibt sich das Ergebnisbild Res, wie dieses in Fig. 4 gezeigt ist. Letztendlich können sich die Bilder Img1, Img2, Img3 ändern, wobei das Template Temp vorzugsweise zumindest für die Dauer einer Phase statisch ist.

Im erfindungsgemäßen Auswahlverfahren werden, wie in Fig. 4 gezeigt, in der ersten Phase die vier Zielfelder 51, 52, 53, 54 berücksichtigt. Diese kennzeichnen jeweils einen oberen linken Eckbereich bzw. einen oberen rechten Eckbereich bzw. einen unteren linken Eckbereich bzw. einen unteren rechten Eckbereich der Bilder Img1, Img2, Img3.

Das erfindungsgemäße Verfahren verarbeitet die Bilder Img1, Img2, Img3 weiter, wobei das Kalibrierungsmuster mit einem Umrissviereck 40 umgeben wird. Das Umrissviereck 40 hat vier Eckpunkte 41, 42, 43, 44 zur Kennzeichnung der linken oberen Ecke bzw. der rechten oberen Ecke bzw. der linken unteren Ecke bzw. der rechten unteren Ecke des Musters. Das erfindungsgemäße Verfahren zur Gewinnung der Kalibrierungsdaten KalData1 kann so ausgebildet sein, dass es in der ersten Phase aus der Vielzahl von Bildern Img1, Img2, Img3 das Bild als erstes Kalibrierungsbild Kall auswählt, bei dem der Eckpunkt 41 im ersten vordefinierten Bereich gemäß dem ersten Zielfeld 51, der zweite Eckpunkt 42 im vordefinierten Bereich des zweiten Zielfeldes 52, der dritte Eckpunkt 43 im vordefinierten Bereich des dritten Zielfelds 53 und der vierte Eckpunkt 44 im vordefinierten Bereich des vierten Zielfelds 54 ist. In der in Fig. 4 gezeigten Ansicht erfüllt lediglich der dritte Eckpunkt 43 die Anforderung, dass dieser Eckpunkt 43 innerhalb des vordefinierten Bereichs des dritten Zielfelds 53 ist. Insofern kann das dort verarbeitete Bild Img1, Img2, Img3 nicht als Kalibrierungsbild Kall verwandt werden.

In einem anderen Ausführungsbeispiel der ersten Phase kann das Verfahren so modifiziert werden, dass lediglich drei der Eckpunkte 41, 42, 43, 44 in den für diese vorgesehenen Bereichen sein müssen.

Fig. 5 zeigt eine weitere Ansicht, wobei diese die zweite Phase zur Gewinnung des zweiten Kalibrierungsbilds Kal2 verdeutlichen soll. Die Ansicht kann so erzeugt werden, wie diese anhand der Fig. 3 für die erste Phase erläutert wurde. Das Template Temp mit den Zielfeldern 51, 52, 53, 54, 55 unterscheidet sich jedoch von dem der ersten Phase. In Fig. 5 sind lediglich drei Zielfelder 53, 54, 55 zur Kennzeichnung von drei vordefinierten Bereichen vorgesehen. Das dritte Zielfeld 53 sowie das vierte Zielfeld 54 sind wiederum quadratisch ausgebildet und befinden sich nahe der unteren linken Bildecke bzw. der unteren rechten Bildecke. Im Unterschied zu den Zielfeldern 53, 54 der Fig. 4 schließen diese jedoch nicht direkt an den unteren Bildrand an.

Das fünfte, längliche Zielfeld 55 ist Längsrichtung X im Wesentlichen mittig angeordnet und hat eine rechteckige Ausgestaltung. In der zweiten Phase des Ausführungsbeispiels wird das Zielbild der Bilder Img1, Img2, Img3 als zweites Kalibrierungsbild Kal2 ausgewählt, bei dem der dritte Eckpunkt 43 im vordefinierten Bereich des dritten Zielfelds 53, der vierte Eckpunkt 44 im vordefinierten Bereich des vierten Zielfelds 54 und ein Mittelpunkt 45 im vordefinierten Bereich des fünften Zielfelds 55 ist. Der Mittelpunkt 45 befindet sich auf der Linie des Umrissvierecks 40 mittig zwischen dem ersten Eckpunkt 41 und dem zweiten Eckpunkt 42.

Fig. 6 zeigt eine exemplarische Ansicht für die dritte Phase zur Gewinnung des dritten Kalibrierungsbilds Kal3. Das hier verwandte Template Temp mit den Zielfeldern 51, 52, 55 ist letztendlich eine horizontale Spiegelung des Templates Temp aus Fig. 5. In der dritten Phase erfolgt eine Auswahl eines der Bilder Img1, Img2, Img3 als drittes Kalibrierungsbild Kal3 nur dann, wenn sich der erste Eckpunkt 41 im vordefinierten Bereich des ersten Zielfelds 51, der zweite Eckpunkt 42 im vordefinierten Bereich des zweiten Zielfelds 52 und der nun untenliegende Mittelpunkt 45 im ebenfalls untenliegenden vordefinierten Bereich des fünften Zielfelds 55 befindet. Die in Fig. 6 gezeigte Ansicht erfüllt dieses Auswahlkriterium, so dass das dieser Ansicht zu Grunde liegende Bild, z.B. Bild Img1, als drittes Kalibrierungsbild Kal3 ausgewählt werden kann.

Fig. 7 zeigt eine Ansicht für die vierte Phase. Hier wird ein Template Temp verwandt, das rechtseitig quadratische Zielfelder 52 und 54 aufweist, die jeweils den oberen und den unteren Bildrand kontaktieren. Hinsichtlich des rechten Bildrands ist ein deutlicher Versatz nach links (in Längsrichtung X) vorgesehen. Das längliche, rechteckige fünfte Zielfeld 55 erstreckt sich in seiner Längsrichtung entlang der Querrichtung Y. Das fünfte Zielfeld 55 ist in der linken Bildhälfte angeordnet, wobei ein deutlicher Abstand zu allen Rändern vorgesehen ist. In der vierten Phase erfolgt eine Auswahl eines Bilds Img1, Img2, Img3 als viertes Kalibrierungsbild Kal4 dann, wenn zumindest der Mittelpunkt 45 in dem vordefinierten Bereich des fünften Zielfelds 55, der zweite Eckpunkt 52 im vordefinierten Bereich des zweiten Zielfelds 52 und der vierte Eckpunkt 44 im vordefinierten Bereich des vierten Zielfelds 54 ist.

Das Template Temp der Fig. 8 ist im Endeffekt eine vertikale Spiegelung des Templates Temp aus Fig. 7. Die sich ergebende Ansicht dient zur Veranschaulichung der fünften Phase. Hier wird entsprechend der vorgehend beschriebenen Phase ein Bild Img1, Img2, Img3 als fünftes Kalibrierungsbild Kal5 dann ausgewählt, wenn der erste Eckpunkt 41 einen vordefinierten Bereich des ersten Zielfelds 51, der dritte Eckpunkt 53 im vordefinierten Bereich des dritten Zielfelds 53 und der Mittelpunkt 45 im vordefinierten Bereich des fünften Zielfelds 55 ist.

Erfindungsgemäß können so für jede Optik 21, 22 fünf Kalibrierungsbilder Kal1, Kal2, Kal3, Kal4, Kal5 bzw. Kal1', Kal2', Kal3', Kal4', Kal5' gewonnen werden, um die ersten Kalibrierungsdaten KalData1 bzw. die zweiten Kalibrierungsdaten KalData2 zu ermitteln. Die Kalibrierungsdaten KalData1 und/oder KalData2 können beispielsweise mittels des von Zhengyou Zhang im Artikel "A Flexible New Technique for Camera Calibration" beschriebenen Verfahrens gewonnen werden. Andere Implementierungen sind möglich.

Bei den beschriebenen Ausführungsbeispielen wurden fünf Kalibrierungsbilder pro Optik ausgewählt. Es ist erfindungsgemäß möglich, beide Kalibrierungsbilder Kalibrierungsbilder Kal1, Kal2, Kal3, Kal4, Kal5 bzw. Kal1', Kal2', Kal3', Kal4', Kal5' auszuwählen, um die Robustheit des Verfahrens zu erhöhen. Hierfür können weitere Phasen vorgesehen sein. Ebenso ist es denkbar, eine weniger robuste Kalibrierung anhand von lediglich zwei Kalibrierungsbildern, beispielsweise dem ersten und zweiten Kalibrierungsbild Kal1, Kal2 zu ermitteln.

Des Weiteren wurden in den beschriebenen Ausführungsbeispielen die einzelnen Phasen so durchlaufen, dass zunächst Kalibrierungsdaten KalData1 für die erste Optik 21 und dann die Kalibrierungsdaten KalDat2 für die zweite Optik gewonnen wurden. Theoretisch ist es denkbar, in einer Phase ein geeignetes Kalibrierungsbild für die erste und die zweite Optik 21, 22 zu gewinnen. Des Weiteren ist es möglich, dass die erste Phase für die zweite Optik 22 unmittelbar auf die erste Phase für die erste Optik 21 folgt. Erfindungsgemäß können die einzelnen Kalibrierungsphasen in beliebigen Permutationen durchlaufen werden. In den beschriebenen Ausführungsbeispielen werden konkrete Templates Temp angegeben, die jeweils einem Satz von vordefinierten Bereichen zugeordnet sind. Erfindungsgemäß ist es möglich, die zugeordneten vordefinierten Bereiche zu variieren. Beispielsweise können anstelle von quadratischen Bereichen rechteckige Bereiche oder kreisförmige Bereiche verwendet werden. Ebenso kann anstelle des rechteckigen Zielfelds 55 ein quadratisches oder rundes Zielfeld treten. Weiterhin ist es möglich, Zielfelder zu schaffen, die sich über die gesamte Länge oder Breite der Bilder (Bänder) erstrecken. Diese Maßnahme ist insbesondere zum Ersatz des fünften Zielfelds 55 geeignet.

In einem Ausführungsbeispiel kann zusätzlich und/oder anstelle der intrinsischen Kalibrierung mittels des beschriebenen Verfahrens eine extrinsische Kalibrierung erfolgen. Bei der extrinsischen Kalibrierung wird eine Kalibrierungsvorlage 30 vorzugsweise gleichzeitig mittels der ersten Optik 21 und der zweiten Optik 22 erfasst und verarbeitet. Die extrinsischen Kalibrierungsdaten ergeben sich anhand einer Korrelation der beiden erfassten Bilder. In einem erfindungsgemäßen Ausführungsbeispiel erfolgt eine Bewertung einer Vielzahl von Bildern derart, dass festgestellt werden kann, ob diese für eine präzise extrinsische Kalibrierung geeignet sind. Bei dieser Bewertung kann eines der beschriebenen Verfahren verwendet werden. Insbesondere kann hier in einer oder mehreren Phasen ermittelt werden, ob sich ein bestimmter Markierungspunkt in einem hierfür vorgesehenen vordefinierten Feld befindet. In Abhängigkeit von dem Ergebnis dieser Auswertung kann ein bestimmtes Zielbild als extrinsisches Kalibrierungsbild ausgewählt werden.

An dieser Stelle sei darauf hingewiesen, dass alle oben beschriebenen Teile und Verfahrensschritte für sich allein gesehen und in jeder Kombination als erfindungswesentlich beansprucht werden.

### Bezugszeichenliste

- Img1, Img2, Img3: Bild
- Kal1, Kal2, Kal3, Kal4, Kal5: Kalibrierungsbild
- Kal1', Kal2', Kal3', Kal4', Kal5': Kalibrierungsbild
- Temp: Template
- X: Längsrichtung
- Y: Querrichtung
- 10: Computer
- 11: Verarbeitungseinrichtung
- 12: Anzeigeeinrichtung
- 13: computerlesbarer Speicher
- 20: Stereokamera
- 21: erste Optik
- 22: zweite Optik
- 30: Kalibrierungsvorlage
- 31: Kalibrierungsquadrat
- 40: Umrissviereck
- 41, 42, 43, 44: Eckpunkte
- 45: Mittelpunkt
- 51, 52, 53, 54, 55: Zielfeld

## Patentansprüche

1. Verfahren zur Gewinnung von, insbesondere intrinsischen, Kalibrierungsdaten (KalData1, KalData2) einer Kamera, insbesondere einer Stereokamera (20),
wobei das Verfahren umfasst:
a) Erfassen einer Vielzahl von Bildern (Img1, Img2, Img3) mittels der Kamera, wobei die Bilder (Img1, Img2, Img3) eine Abbildung eines Kalibrierungsmusters (30) umfassen;
b) Auswahl mindestens eines ersten Kalibrierungsbilds (Kal1, Kal1') aus der Vielzahl von Bildern (Img1, Img2, Img3);
c) Auswahl mindestens eines zweiten Kalibrierungsbilds (Kal2, Kal2') aus der Vielzahl von Bildern (Img1, Img2, Img3);
d) Verarbeitung des ersten und des zweiten Kalibrierungsbildes (Kal1, Kal1', Kal2, Kal2') zur Gewinnung der Kalibrierungsdaten (KalData1, KalData2),
wobei
der Schritt b) umfasst:
b1) Bestimmen mindestens eines Markierungspunkts, insbesondere eines Eckpunkts (41, 42, 43, 44), des Kalibrierungsmusters (30) in einem Zielbild der Vielzahl von Bildern;
b2) Bestimmen, ob sich der Markierungspunkt innerhalb eines vordefinierten Bereichs des Zielbilds befindet;
b3) Auswahl des Zielbilds als erstes Kalibrierungsbild (Kal1, Kal1'), wenn sich der Markierungspunkt innerhalb des vordefinierten Bereichs befindet
**dadurch gekennzeichnet, dass**
in Schritt b) mindestens zwei Markierungspunkte des Kalibrierungsmusters (30) in dem Zielbild bestimmt werden, wobei eine Auswahl des Zielbilds als erstes Kalibrierungsbild (Kal1, Kal1') nur dann erfolgt, wenn sich zumindest die Markierungspunkte innerhalb eines für den jeweiligen Markierungspunkt vordefinierten Bereichs befinden, wobei die Markierungspunkte und die Bereiche derart gewählt sind, dass durch die Markierungspunkte und die Bereiche eine Ausrichtung des Kalibrierungsmusters vorgegeben wird, wobei das mindestens erste Kalibrierungsbild (Kal1, Kal1') und das mindestens zweite Kalibierungsbild (Kal2, Kal2') unterschiedlich ausgerichtete Kalibrierungsmuster aufweisen.

2. Verfahren nach Anspruch 1,
**dadurch gekennzeichnet, dass**
in Schritt b) mindestens drei Markierungspunkte des Kalibrierungsmusters (30) in dem Zielbild bestimmt werden.

3. Verfahren nach Anspruch 1 oder 2,
**dadurch gekennzeichnet, dass**
mindestens einer der vordefinierten Bereiche derart gewählt ist, dass der vordefinierte Bereich Bildpunkte erfasst, die in Längsrichtung (X) maximal 20 % der Gesamtlänge des Zielbilds von einer Ecke des Zielbilds entfernt sind; und/oder
mindestens einer der vordefinierten Bereiche derart gewählt ist, dass der vordefinierte Bereich Bildpunkte erfasst, die in Querrichtung (Y) maximal 20 % der Gesamthöhe des Zielbilds von einer Ecke des Zielbilds entfernt sind.

4. Verfahren nach einem der vorhergehenden Ansprüche,
**dadurch gekennzeichnet, dass**
der Schritt c) umfasst:
c1) Bestimmen mindestens eines ersten Markierungspunkts, insbesondere eines Mittelpunkts (45) zwischen zwei Eckpunkten, des Kalibrierungsmusters (30) in einem zweiten Zielbild der Vielzahl von Bildern (Img1, Img2, Img3);
c2) Bestimmen, ob sich der erste Markierungspunkt gemäß Schritt c1) innerhalb eines vordefinierten Bereichs des zweiten Zielbilds befindet;
c3) Auswahl des Zielbilds als zweites Kalibrierungsbild (Kal2, Kal2'), wenn sich der erste Markierungspunkt gemäß Schritt c1) innerhalb des vordefinierten Bereichs des zweiten Zielbilds befindet.

5. Verfahren nach einem der vorhergehenden Ansprüche, insbesondere nach Anspruch 4,
**dadurch gekennzeichnet, dass**
der Schritt c) umfasst:
c4) Bestimmen mindestens eines zweiten Markierungspunkts, insbesondere eines Eckpunkts (41, 42, 43, 44), des Kalibrierungsmusters (30) in dem zweiten Zielbild;
c5) Bestimmen, ob sich der zweite Markierungspunkt innerhalb eines vordefinierten Bereichs des zweiten Zielbilds befindet;
c6) Auswahl des zweiten Zielbilds als zweites Kalibrierungsbild (Kal2, Kal2'), wenn sich der zweite Markierungspunkt innerhalb des vordefinierten Bereichs befindet.

6. Verfahren nach einem der vorhergehenden Ansprüche, insbesondere nach Anspruch 5,
**dadurch gekennzeichnet, dass**
als Markierungspunkte mindestens zwei Eckpunkte (41, 42, 43, 44) bestimmt werden, wobei eine Auswahl des zweiten Zielbilds als zweites Kalibrierungsbild (Kal2, Kal2') nur dann erfolgt, wenn sich der jeweilige Markierungspunkt innerhalb eines für den jeweiligen Markierungspunkt vordefinierten Bereichs befindet.

7. Verfahren nach einem der vorhergehenden Ansprüche, insbesondere nach Anspruch 5 oder 6,
**dadurch gekennzeichnet, dass**
sich mindestens einer der vordefinierten Bereiche innerhalb eines Bands befindet, das deutlich, insbesondere um mehr als 10%, von einem der Ränder des Zielbilds beabstandet ist.

8. Verfahren nach einem der vorhergehenden Ansprüche,
**dadurch gekennzeichnet, dass**
zur Bestimmung der (zweiten) Markierungspunkte ein Polygon (40) berechnet wird, das zumindest einen Teilabschnitt des Kalibrierungsmusters (30) umfängt, wobei das Polygon (40) vorzugsweise maximal 8, insbesondere maximal 4 Ecken hat.

9. Verfahren nach einem der vorhergehenden Ansprüche,
**dadurch gekennzeichnet, dass**
zumindest einige der Vielzahl von erfassten Bildern (Img1, Img2, Img3) in Verbindung mit Feldern (51 bis 55), die die vordefinierten Bereiche kennzeichnen, auf einer Anzeigeeinrichtung, vorzugsweise in Echtzeit, angezeigt werden.

10. Verfahren nach einem der vorhergehenden Ansprüche,
**dadurch gekennzeichnet, dass**
die erfassten Bilder (Img1, Img2, Img3) in einer ersten Phase solange in Verbindung mit einem ersten Satz von Feldern (51 bis 55), die jeweils einen vordefinierten Bereich kennzeichnen, angezeigt werden, bis der Schritt b) abgeschlossen ist; und vorzugsweise nach einem Abschluss der ersten Phase die erfassten Bilder (Img1, Img2, Img3) in einer zweiten Phase solange in Verbindung mit einem zweiten Satz von Feldern (51 bis 55), die jeweils einen vordefinierten Bereich kennzeichnen, angezeigt werden, bis der Schritt c) abgeschlossen ist.

11. Verfahren nach einem der vorhergehenden Ansprüche, insbesondere nach Anspruch 10,
**dadurch gekennzeichnet, dass**
in einer dritten Phase ein Anzeigen der erfassten Bilder (Img1, Img2, Img3) in Verbindung mit einem dritten Satz von Feldern (51 bis 55) erfolgt, wobei der dritte Satz von Feldern (51 bis 55) eine Anordnung von Feldern (51 bis 55) enthält, die spiegelsymmetrisch zu den Feldern (51 bis 55) des zweiten Satzes angeordnet sind.

12. Verfahren zur Gewinnung von Kalibrierungsdaten für eine Stereokamera,
**dadurch gekennzeichnet, dass**
das Verfahren gemäß einem der vorhergehenden Ansprüche zur Gewinnung von ersten Kalibrierungsdaten (KalData1) für eine erste Optik der Stereokamera (20) durchgeführt wird und
das Verfahren gemäß einem der vorhergehenden Ansprüche zur Gewinnung von zweiten Kalibrierungsdaten (KalData2) für eine zweite Optik der Stereokamera (20) durchgeführt wird.

13. Verfahren zur Gewinnung von Kalibrierungsdaten gemäß Anspruch 12 für eine Stereokamera,
**gekennzeichnet durch**:
ein Bewegen eines Roboters und/oder eines Roboterarms mit der Kamera vor der Erfassung zumindest einiger der Vielzahl von Bildern (Img1, Img2, Img3) mittels der Kamera.

14. Computerlesbarer Speicher mit Instruktionen, die bei der Ausführung durch eine Recheneinheit diese veranlassen, das Verfahren gemäss einem der vorhergehenden Ansprüche auszuführen.

15. System, umfassend:
- eine Kamera, insbesondere eine Stereokamera (20);
- eine Anzeigeeinrichtung (12);
- mindestens eine Recheneinheit (11);
- einen computerlesbaren Speicher (13) gemäß dem Anspruch 14.

## Claims

1. A method for obtaining in particular intrinsic calibration data (KalData1, KalData2) of a camera, in particular a stereo camera (20),
the method comprising:
a) capturing a plurality of images (Img1, Img2, Img3) by means of the camera, the images (Img1, Img2, Img3) comprising a representation of a calibration pattern (30);
b) selecting at least one first calibration image (Kal1, Kal1') from the plurality of images (Img1, Img2, Img3);
c) selecting at least one second calibration image (Kal2, Kal2') from the plurality of images (Img1, Img2, Img3);
d) processing the first and the second calibration image (Kal1, Kal1', Kal2, Kal2') for obtaining the calibration data (KalData1, KalData2),
wherein
step b) comprises:
b1) determining at least one marking point, in particular a corner point (41, 42, 43, 44) of the calibration pattern (30) in a target image of the plurality of images;
b2) determining whether the marking point is within a predefined area of the target image;
b3) selecting the target image as a first calibration image (Kal1, Kal1'), when the marking point is within the predefined area,
**characterized in that**
in step b), at least two marking points of the calibration pattern (30) are determined in the target image, wherein a selection of the target image as a first calibration image (Kal1, Kal1') is only made when at least the marking points are within an area predefined for the respective marking point, wherein the marking points and the areas are chosen such that an orientation of the calibration pattern is prescribed by the marking points and the areas, wherein at least the first calibration image (Kal1, Kal1') and the at least second calibration image (Kal2, Kal2') have calibration patterns of different orientations.

2. The method according to claim 1,
**characterized in that**
in step b), at least three marking points of the calibration pattern (30) are determined in the target image.

3. The method according to claim 1 or 2,
**characterized in that**
at least one of the predefined areas is chosen such that the predefined area captures pixels which, in the longitudinal direction (X), are spaced from a corner of the target image by a maximum of 20 % of the entire length of the target image; and/or
at least one of the predefined areas is chosen such that the predefined area captures pixels which, in the transverse direction (Y), are spaced from a corner of the target image by a maximum of 20 % of the entire height of the target image.

4. The method according to anyone of the preceding claims,
**characterized in that**
step c) comprises:
c1) determining at least one marking point, in particular a central point (45) between two corner points of the calibration pattern (30) in a second target image of the plurality of images (Img1, Img2, Img3);
c2) determining whether the first marking point according to step c1) is within a predefined area of the second target image;
c3) selecting the target image as a second calibration image (Kal2, Kal2') when the first marking point according to step c1) is within the predefined area of the second target image.

5. The method according to anyone of the preceding claims, in particular according to claim 4,
**characterized in that**
step c) comprises:
c4) determining at least one second marking point, in particular a corner point (41, 42, 43, 44) of the calibration pattern (30) in the second target image;
c5) determining whether the second marking point is within a predefined area of the second target image;
c6) selecting the second target image as a second calibration image (Kal2, Kal2') when the second marking point is within the predefined area.

6. The method according to anyone of the preceding claims, in particular according to claim 5,
**characterized in that**
as the marking points, at least two corner points (41, 42, 43, 44) are determined, wherein a selection of the second target image as a second calibration image (Kal2, Kal2') is only made when the respective marking point is within an area predefined for the respective marking point.

7. The method according to anyone of the preceding claims, in particular according to claim 5 or 6,
**characterized in that**
at least one of the predefined areas is within a band that is significantly spaced, in particular by more than 10 %, from one of the edges of the target image.

8. The method according to anyone of the preceding claims,
**characterized in that**
for determining the (second) marking points, a polygon (40) surrounding at least one section of the calibration pattern (30 is calculated, wherein the polygon (40) preferably has a maximum of 8, in particular a maximum of 4 corners.

9. The method according to anyone of the preceding claims,
**characterized in that**
at least some of the plurality of captured images (Img1, Img2, Img3) are displayed on a display device, preferably in real time, in conjunction with fields (51 to 55) identifying the predefined areas.

10. The method according to anyone of the preceding claims,
**characterized in that**
the captured images (Img1, Img2, Img3) are displayed in a first phase in conjunction with a first set of fields (51 to 55), each identifying a predefined area, until step b) is completed; and
preferably after completion of the first phase, the captured images (Img1, Img2, Img3) are displayed in a second phase in conjunction with a second set of fields (51 to 55), each identifying a predefined area, until step c) is completed.

11. The method according to anyone of the preceding claims, in particular according to claim 10,
**characterized in that**
in a third phase, a display of the captured images (Img1, Img2, Img3) in conjunction with a third set of fields (51 to 55) takes place, wherein the third set of fields (51 to 55) includes an arrangement of fields (51 to 55) arranged in mirror symmetry to the fields (51 to 55) of the second set.

12. A method for obtaining calibration data for a stereo camera,
**characterized in that**
the method according to anyone of the preceding claims for obtaining first calibration data (KalData1) is performed for a first optical system of the stereo camera (20), and
the method according to anyone of the preceding claims for obtaining second calibration data (KalData2) is performed for a second optical system of the stereo camera (20).

13. The method for obtaining calibration data according to claim 12 for a stereo camera,
**characterized by**:
moving a robot and/or a robot arm with the camera prior to capturing at least some of the plurality of images (Img1, Img2, Img3) by means of the camera.

14. A computer-readable memory including instructions which, when executed by a computing unit, cause the computing unit to execute the method according to anyone of the preceding claims.

15. A system, comprising:
- a camera, in particular a stereo camera (20);
- a display device (12);
- at least one computing unit (11);
- a computer-readable memory (13) according to claim 14.

## Revendications

1. Procédé d'obtention de données de données de calibrage (KalData1, KalData2), en particulier intrinsèques, d'une caméra, en particulier d'une caméra stéréo (20),
sachant que le procédé comprend :
a) la saisie d'une pluralité d'images (Img1, Img2, Img3) au moyen de la caméra, sachant que les images (Img1, Img2, Img3) comprennent une représentation d'un motif de calibrage (30) ;
b) la sélection d'au moins une première image de calibrage (Kal1, Kal1') à partir de la pluralité d'images (Img1, Img2, Img3) ;
c) la sélection d'au moins une deuxième image de calibrage (Kal2, Kal2') à partir de la pluralité d'images (Img1, Img2, Img3) ;
d) le traitement de la première et de la deuxième image de calibrage (Kal1, Kal1', Kal2, Kal2') pour obtenir des données de calibrage (KalData1, KalData2),
sachant que
l'étape b) comprend :
b1) la détermination d'au moins un point de marquage, en particulier d'un point d'angle (41, 42, 43, 44), du motif de calibrage (30) dans une image cible de la pluralité d'images ;
b2) le fait de déterminer si le point de marquage se trouve à l'intérieur d'une zone prédéfinie de l'image cible ;
b3) la sélection de l'image cible comme première image de calibrage (Kal1, Kal1') si le point de marquage se trouve à l'intérieur de la zone prédéfinie,
**caractérisé en ce que**
à l'étape b), au moins deux points de marquage du motif de calibrage (30) sont déterminés dans l'image cible, sachant qu'une sélection de l'image cible comme première image de calibrage (Kal1, Kal1') n'est effectuée que si au moins les points de marquage se trouvent à l'intérieur d'une zone prédéfinie pour le point de marquage respectif, sachant que les points de marquage et les zones sont choisis de telle manière qu'un alignement du motif de calibrage soit spécifié par les points de marquage et les zones, sachant que l'au moins une première image de calibrage (Kal1, Kal1) et l'au moins une deuxième image de calibrage (Kal2, Kal2') présentent des motifs de calibrage alignés différemment.

2. Procédé selon la revendication 1,
**caractérisé en ce que**
à l'étape b), au moins trois points de marquage du motif de calibrage (30) sont déterminés dans l'image cible.

3. Procédé selon la revendication 1 ou 2,
**caractérisé en ce que**
au moins une des zones prédéfinies est choisie de telle manière que la zone prédéfinie saisisse des points d'image qui sont éloignés d'un angle de l'image cible de maximum 20 % de la longueur totale de l'image cible en direction longitudinale (X) ; et/ou
au moins une des zones prédéfinies est choisie de telle manière que la zone prédéfinie saisisse des points d'image qui sont éloignés d'un angle de l'image cible de maximum 20 % de la hauteur totale de l'image cible en direction transversale (Y).

4. Procédé selon l'une des revendications précédentes,
**caractérisé en ce que**
l'étape c) comprend :
c1) la détermination d'au moins un premier point de marquage, en particulier d'un point médian (45) entre deux points d'angle, du motif de calibrage (30) dans une deuxième image cible de la pluralité d'images (Img1, Img2, Img3) ;
c2) le fait de déterminer si le premier point de marquage selon l'étape c1) se trouve à l'intérieur d'une zone prédéfinie de la deuxième image cible ;
c3) la sélection de l'image cible comme deuxième image de calibrage (Kal2, Kal2') si le premier point de marquage selon l'étape c1) se trouve à l'intérieur de la zone prédéfinie de la deuxième image cible.

5. Procédé selon l'une des revendications précédentes, en particulier selon la revendication 4,
**caractérisé en ce que**
l'étape c) comprend :
c4) la détermination d'au moins un deuxième point de marquage, en particulier d'un point d'angle (41, 42, 43, 44), du motif de calibrage (30) dans la deuxième image cible ;
c5) le fait de déterminer si le deuxième point de marquage se trouve à l'intérieur d'une zone prédéfinie de la deuxième image cible ;
c6) la sélection de la deuxième image cible comme deuxième image de calibrage (Kal2, Kal2') si le deuxième point de marquage se trouve à l'intérieur de la zone prédéfinie.

6. Procédé selon l'une des revendications précédentes, en particulier selon la revendication 5,
**caractérisé en ce que**
au moins deux points d'angle (41, 42, 43, 44) sont déterminés comme points de marquage, sachant qu'une sélection de la deuxième image comme deuxième image de calibrage (Kal2, Kal2') n'est effectuée que si le point de marquage respectif se trouve à l'intérieur d'une zone prédéfinie pour le point de marquage respectif.

7. Procédé selon l'une des revendications précédentes, en particulier selon la revendication 5 ou 6,
**caractérisé en ce que**
au moins une des zones prédéfinies se trouve à l'intérieur d'une bande qui est nettement, en particulier de plus de 10 %, espacée d'un des bords de l'image cible.

8. Procédé selon l'une des revendications précédentes,
**caractérisé en ce que**
pour la détermination des (deuxièmes) points de marquage, un polygone (40) qui entoure au moins une section partielle du motif de calibrage (30) est calculé, sachant que le polygone (40) a de préférence maximum 8, en particulier maximum 4 angles.

9. Procédé selon l'une des revendications précédentes,
**caractérisé en ce que**
au moins certaines de la pluralité d'images (Img1, Img2, Img3) saisies sont affichées sur un dispositif d'affichage, de préférence en temps réel, en relation avec des champs (51 à 55) qui caractérisent les zones prédéfinies.

10. Procédé selon l'une des revendications précédentes,
**caractérisé en ce que**
les images (Img1, Img2, Img3) saisies sont, dans une première phase, affichées en relation avec un premier jeu de champs (51 à 55) qui caractérisent respectivement une zone prédéfinie, jusqu'à ce que l'étape b) soit achevée ; et
de préférence après un achèvement de la première phase, les images (Img1, Img2, Img3) saisies sont, dans une deuxième phase, affichées en relation avec un deuxième jeu de champs (51 à 55) qui caractérisent respectivement une zone prédéfinie, jusqu'à ce que l'étape c) soit achevée.

11. Procédé selon l'une des revendications précédentes, en particulier selon la revendication 10,
**caractérisé en ce que**
dans une troisième phase, un affichage des images (Img1, Img2, Img3) saisies est effectué en relation avec un troisième jeu de champs (51 à 55), sachant que le troisième jeu de champs (51 à 55) contient un agencement de champs (51 à 55) qui sont disposés de manière symétrique par réflexion par rapport aux champs (51 à 55) du deuxième champ.

12. Procédé d'obtention de données de calibrage pour une caméra stéréo,
**caractérisé en ce que**
le procédé selon l'une des revendications précédentes est effectué pour obtenir des premières données de calibrage (KalData1) pour une première optique de la caméra stéréo (20) et
le procédé selon l'une des revendications précédentes est effectué pour obtenir des deuxièmes données de calibrage (KalData2) pour une deuxième optique de la caméra stéréo (20).

13. Procédé d'obtention de données de calibrage selon la revendication 12 pour une caméra stéréo,
**caractérisé par** :
un mouvement d'un robot et/ou d'un bras de robot avec la caméra avant la saisie d'au moins certaines de la pluralité d'images (Img1, Img2, Img3) au moyen de la caméra.

14. Mémoire lisible par ordinateur contenant des instructions qui, lors de l'exécution par une unité de calcul, font en sort que celle-ci exécute le procédé selon l'une des revendications précédentes.

15. Système, comprenant :
- une caméra, en particulier une caméra stéréo (20) ;
- un dispositif d'affichage (12) ;
- au moins une unité de calcul (11) ;
- une mémoire (13) lisible par ordinateur selon la revendication 14.
